(19) Europäisches Patentamt
European Patent Office
Office européen des brevets

(11) **EP 2 466 898 B1**

## (12) EUROPEAN PATENT SPECIFICATION

(45) Date of publication and mention
of the grant of the patent:
**18.10.2017 Bulletin 2017/42**

(51) Int Cl.:
***H04N 13/00*** *(2006.01)*

(21) Application number: **10196045.8**

(22) Date of filing: **20.12.2010**

(54) **A method and apparatus for calibration of stereo images**

Verfahren und Vorrichtung zur Kalibrierung von Stereobildern

Procédé et appareil pour l'étalonnage d'images stéréo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2012 Bulletin 2012/25**

(73) Proprietor: **Vestel Elektronik Sanayi ve Ticaret A.S.
45030 Manisa (TR)**

(72) Inventor: **Çigla, Cevahir
Ankara (TR)**

(74) Representative: **Beck Greener
Fulwood House
12 Fulwood Place
London WC1V 6HR (GB)**

(56) References cited:
**EP-A1- 2 259 599        EP-A2- 2 230 856
WO-A1-2006/062325**

- **FECKER U ET AL: "Histogram-Based Prefiltering
for Luminance and Chrominance Compensation
of Multiview Video", IEEE TRANSACTIONS ON
CIRCUITS AND SYSTEMS FOR VIDEO
TECHNOLOGY, IEEE SERVICE CENTER,
PISCATAWAY, NJ, US, vol. 18, no. 9, 1 September
2008 (2008-09-01), pages 1258-1267,
XP011227822, ISSN: 1051-8215, DOI:
DOI:10.1109/TCSVT.2008.926997**

**Description**

The present invention relates to a method and apparatus for calibration of stereo images.

Typically, during capture of stereo video, two independent image capture devices capture images of a common scene from different perspectives or viewing angles. When played back, the two images are used to generate 3-dimensional (3D) views. In other words, a viewer when watching a 3D film is presented at any time within his field of vision a composite image that includes both of the simultaneously captured views of the scene. It is known that calibration inequalities may exist between stereo views. In particular colour calibration inequalities may exist.

The calibration inequalities may depend on differences between colour characteristics of the two cameras, occlusions, lighting conditions and specular surfaces in the scene. Calibration inequalities in the image capture device can have deleterious consequences on the 3D effect or "feeling" on a 3D television (TV) and cause errors in stereo matching algorithms used to generate the 3D views from the stereo captured images. Accordingly, some means for ensuring that stereo views are in the same colour gamut so as to provide better 3D feeling and stereo matching is desired.

Colour inequalities can also be observed in multi-view video which is obtained through capturing of a scene through multiple cameras. In the article entitled "Histogram Based Pre-filtering for Luminance and Chrominance Compensation of Multi-view Video" by K Ulrich Faker, Marcus Barkowsky and Andre Kaup and published in IEEE Transactions on Circuits and Systems for Video Technology, Vol 18 No 9, September 2008 the effect of colour inequalities is analysed in terms of coding efficiency. A solution is proposed depending on the cumulative histogram distribution of the multiple views.

The cumulative histograms (RGB) of each view are extracted by considering multiple time instants such as consecutive N frames, in order to handle noise and occlusion problems. Then, one of the views (the centre view) is considered to be the reference for colour equalisation and the other views are considered to be the target views. The cumulative distribution of views is matched to the reference view by finding the two bounding intensities where pixel count (frequency of observation) of the target intensity is between the pixel counts of the bounding intensities. Then, the mapping of the corresponding intensity is assigned to the upper bound. This operation is applied for each intensity level in the target views and for R, G and B spaces independently. A mapping function is extracted and it is applied to each channel independently. Thus, colour equalization is achieved.

In certain cases, features within the mapping function can introduce visual artefacts into the processed image. Such artefacts are not acceptable in 3D TV. For example, occlusions may be observed at boundaries within images, or large differences may exist among intensity frequencies between a stereo pair or images. The averaging of histograms in time does not solve these problems and accordingly, the method of the article by K Ulrich Faker, Marcus Barkowsky and Andre Kaup is not applicable directly for real-time 3D TV systems where problematic cases are frequently encountered.

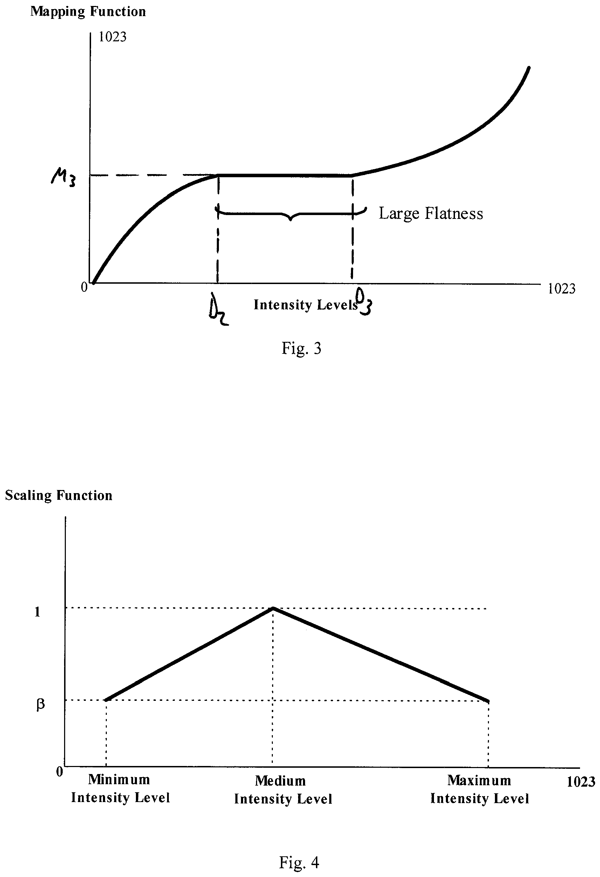

There are, of course, various known methods for the processing of stereo video images. US-A-2010/0066811 discloses a method and apparatus for processing stereo video images. As explained at column 1, paragraph [0002], the system of this document serves to enhance the accuracy of stereo matching by controlling and rectifying brightness for left and right stereo images. In paragraphs [0033] to [0038] there is discussion of the basic algorithm, with reference to Figures 3 to 5H. Histograms are generated of left and right images and each generated histogram is "equalised". Image rectification is then performed in which the "epipolar lines" of the left and right images are made in accordance with each other using a pre-stored calibration parameter.

US-A-2007/0120972 discloses a method and apparatus for processing a 3D video signal which corrects first and second video signals to prevent a reduction in a 3D effect and a disparity estimation error due to a difference between the first and second video signals. The disparity might occur when a difference between first and second video signals exceeds a predetermined threshold and what is referred to as "binocular fusion" is not established. Instead, double vision occurs. The system works by detecting differences between characteristics of the received first and second video signals and correcting one of the signals so as to equalise the characteristics of the first and second video signals.

WO-A-2007/007924 provides a system by which distortion is corrected so as to be able to provide three dimensional stereoscopic image displays by compensating for brightness uniformities of cameras, lens distortion, inter-camera errors and image sizes and inter-camera brightness and colour uniformities occurring between multi-view images picked up with at least four cameras. This system relies on the use of Hough transformations and the calculation of a covariance matrix and a rotational matrix to compensate for errors and image sizes between the different cameras.

US-A-7,505,623 discloses a method and apparatus for processing images to create a novel view of a scene.

US-A-6,111,596, relates to a method for increasing compression efficiency of a stereoscopic image encoder employed for compressively encoding first and second signals representing respective first and second views of a stereoscopic image. The disclosure particularly relates to improvements in methods for digital compression of stereoscopic/3D video by correcting for mismatch in imaging parameters such as, gain and offset differences between the two views which constitute the stereoscopic video. Three example methods are provided. In each of them, histograms are generated for the left and right images.

US-A-2008/0252638, discloses a method and apparatus for rendering image data on a 3D display. The method and apparatus disclosed relate to using a reduced spatial resolution image in the processing of an input signal to generate an output. WO-A-2009/150529, relates to a method for reducing or eliminating ghosting from a stereo image by use of cancellation control masks and ghosting analysis.

According to a first aspect of the present invention, there is provided a method of calibration of stereo images, the method comprising: receiving first and second images representing the two images from a stereo image capture device; generating a first mapping function to map the colour dynamic range of the first image to that of the second image; moderating the first mapping function to generate a smoothed or processed mapping function; and applying the smoothed or processed mapping function to moderate the colour of the first image.

The invention provides a method by which stereo images of a scene such as those from independent sources, i.e. two cameras used to capture a 3D movie, can be processed in real time so as to calibrate the colour of the two images. In other words, parameter(s) of the colour of one of the images may be modified so as to correspond to that or those of the other. The applicant has recognised that modification of a colour mapping function can have the effect of improving quality of played back 3D images.

Preferably, the step of generating a first mapping function to map the colour of the first image to that of the second image, comprises: generating cumulative histograms for each of the first and second images; and, determining a mapping function to map the cumulative histogram of the first image to the cumulative histogram of the second. Preferably, the method is performed independently for colour channels within the images. For example, when done in RGB space the method can be performed for each of the R, G and B channels independently. Thus, an independent first mapping function is generated for each one of the R, G and B channels.

The use of histograms of formed form the two images provides an easy and convenient way by which the image parameters may be monitored and controlled.

Preferably, the method comprises detecting discontinuities in the first mapping function and wherein moderating the first mapping function comprises smoothing the first mapping function to remove the detected discontinuities.

The applicant has recognised that by processing an initially determined mapping function so as to remove discontinuities the processing of stereo images can be greatly improved. Discontinuities are detected by any suitable means or processes and examples are provided below.

Preferably, the smoothing comprises applying to the first mapping function a weighted modification so as to smooth out the discontinuities in the mapping function.

Preferably, the weighted manner comprises use of a weight factor, which factor is decreased for the cases where sharp jumps or long flat regions are included the first mapping function.

Preferably, the method comprises determining one or more of a jump factor ($jump\_factor_{RGB}$) and a flatness factor ($flat\_factor_{RGB}$) in accordance with the following equation:

$$jump\_factor_{RGB} = \max(0, 1 - \frac{ave\_jump}{jump\_THRES})$$

$$flat\_factor_{RGB} = \max(0, 1 - \frac{flat\_num}{flat\_THRES})$$

in which the $jump\_THRES$ and $flat\_THRES$ are user-defined parameters indicating the states where the process should be surpassed due to possible artefacts, and $ave\_jump$ and $flat\_num$ are parameters indicative of the number and/or size of discontinuities within the first mapping function. The values for $jump\_factor_{RCB}$ and $flat\_factor_{RGB}$ are preferably between 0 and 1. Thus, it is required, if the values are to be taken directly from the formulae given above without any need to limit the available ranges (as indicated by the expression "max()"), that the expressions

$$\frac{ave\_jump}{jump\_THRES}$$

and

$$\frac{flat\_num}{flat\_THRES}$$

are less than 1. Given that *jump_THRES* and *flat_THRES* are user-defined parameters, set for example by a television company or an end user, it is possible that in some cases values might be chosen that leave the consequent values of *jump_factor$_{RGB}$* and *flat_factor$_{RGB}$* outside the range of 0 to 1. Hence a maximisation function is defined which limits the values to this desired range.

It will of course be appreciated that the term "*jump_factor$_{RGB}$*" and other such terms used with this subscript are a short hand for values used in each of the channel mapping function determinations. In other words, *jump_factor$_{RGB}$,* may be thought of a being a representation of each of *jump_factor$_R$*, *jump_factor$_G$,* and *jump_factor$_B$* as appropriate within context.

Thus, in this example, user-defined parameters are used so that the degree of smoothing provided to the mapping function can be controlled by a user in dependence on tolerance to artefacts. In that manner, the parameter selection can be achieved by running colour equalization on various stereo videos with different parameters and observing the processed results. Depending on the transfer characteristics of the specific TV, such as contrast ratio, brightness levels; one parameter set involving *jump_THRES* and *flat_THRES* that provide artefact-free processed video can be found by trial and error experimentally. At that point the dependence is on the preferences of the TV Company, making decision between visual quality and artefacts.

Preferably, the weight factor used to determine the smoothing of the first mapping function is defined in dependence on a weight factor calculated in accordance with the equation:

$$weight\_factor = \min(jump\_factor_{RGB}, flat\_factor_{RGB})$$

Preferably, a scaling factor $\beta$ is determined to reduce the effect of the weighting at intensity limits. The scaling factor may be used to decrease calibration effects at the borders of the dynamic range. This prevents possible over or under clipping artefacts at the highest and lowest intensity levels.

Preferably, the scaling factor $\beta$ satisfies the following condition $0.5 < \beta < 1.0$. Preferably, the scaling factor can be varied in dependence for example on the degree of control required at the intensity limits.

Preferably, the method comprises applying a temporal filter so as to remove flicker from processed images.

Preferably, the temporal filter comprises applying the following formula to determine a final *curr_map$_{RCB}$(i)* temporally filtered mapping function for each channel,

$$curr\_map_{RGB}(i) = \alpha * curr\_map_{RGB}(i) + (1-\alpha) * pre\_map_{RGB}(i)$$

in which a well known infinite impulse response (iir) filter is applied with a fixed damping value ($\alpha$) in the range of [0, 1] so as to weight the mapping functions of the current and previous (*pre_map*) frames. As explained above, the subscript "RGB", is used to denote that, in this case, an independent "curr_map(i)" is generated for each one of the channels R, G and B. The selection of damping factor affects the convergence of the colour equalization such that for values of ($\alpha$) close to "1", the effect is observed very fast and with sudden response to changes in video, while for values close to "0" the equalization effect can be observed slowly with smooth response to changes in video. The choice of this parameter is also dependent to the personal preferences of TV Company based on the convergence characteristics mentioned previously.

In one aspect there is provided, a method of calibration of stereo images, the method comprising receiving first and second images from independent image sources representing the two images from a stereo image capture device; generating a first mapping function to map the colour of the first image to that of the second image; moderating the first mapping function to generate a smoothed mapping function; and applying the mapping function to moderate the colour of the first image.

According to a second aspect of the present invention, there is provided apparatus for calibration of first and second stereo images, the apparatus comprising a processor being arranged to, using the processor: generate a first mapping function to map the colour of the first image to that of the second image; moderate the first mapping function to generate a smoothed mapping function; and apply the mapping function to moderate the colour of the first image.

Thus, apparatus is provided that can easily and efficiently process images to calibrate colour between two stereo images. Preferably, the apparatus may be provided as part of, i.e. integrated into, a TV playback apparatus or a video processing apparatus. In some examples, the apparatus comprises memory for storing received raw stereo video signals and/or for storing the processed signals as well or instead. The processing apparatus can be arranged either to store the processed stereo video signals and/or to transmit the processed 3D video. For example, the apparatus could be arranged to write the stored data on to some storage medium such as a DVD or other such storage medium or alternatively it could be arranged to transit the processed data to end users via any known means, e.g. digital television transmission, internet etc.

Preferably, the apparatus comprises means for performing the method of any one or more of steps of the method as described and/or claimed herein.

Examples of embodiments of the present invention will now be described in detail with reference to the accompanying drawings, in which:

Figure 1 is flow chart showing, schematically, a method of processing stereo images;

Figure 2 shows an example of a colour calibration mapping function with a vertical discontinuity;

Figure 3 shows an example of a colour calibration mapping function with a flat discontinuity;

Figure 4 shows a graph of a scaling function for use in stereo image processing;

Figure 5 shows a graph of weighting function modified by scaling function for use in stereo image processing;

Figure 6 is a simplified schematic representation of a TV playback or processing system.

In general the present method enables accurate and effective colour calibration in stereo video. A method is provided for ensuring equalisation of colour between stereo views that is typically required in 3D TVs for better 3D information extraction from stereo video images.

In 3D TV, normally 2 cameras are used to capture a scene from two different view points, thus generating two independent images for each frame. The images may be referred to as "independent" since they are each captured by an independent image capture device such as a video camera, with its own operating parameters. Clearly the two image capture devices may be operating under some common control but aspects of the image capture functionality of each device is independent. For example, the view that each has of a common scene will be slightly different.

When played back using the appropriate apparatus the two independently captured images can generate a 3D effect on a viewer. The present method detects colour differences between the stereo views, i.e. two independent images for each frame, and corrects colour imbalances which occur due to, for example, different calibration parameters between the two cameras.

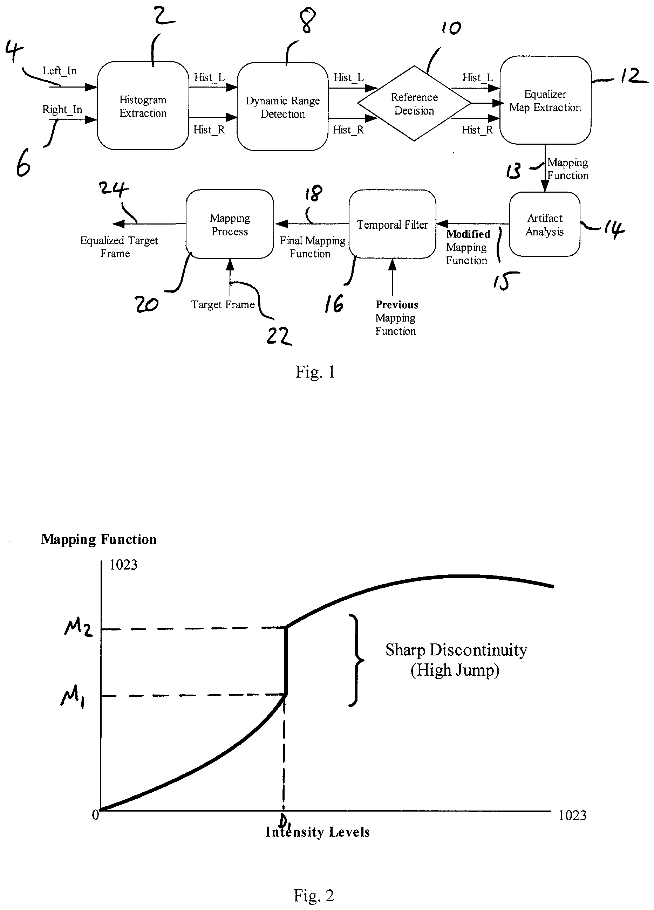

Figure 1 shows a flow diagram representing schematically an example of one embodiment of the present method.

In a first stage 2, labelled "Histogram Extraction", a left image and a right image are provided as inputs 4 and 6 to the process. Histogram extraction is performed in that for each of red (R), green (G) and blue (B) channels, histograms are prepared for each of the left and right images from the respective cameras. Cumulative histograms are then generated for each of the R, G and B channels for each of the two cameras. Thus, in this embodiment 6 cumulative histograms are generated. In the present example, the RGB colour model is used. It will be appreciated that other colour models or spaces may be used as well as or instead of the RGB model.

Next, the cumulative histograms are provided to a stage 8 labelled "Dynamic Range Detection" in which the dynamic range for each of the cumulative histograms is determined. Next, in a stage 10 labelled "Reference Decision", a decision is made as to which of the 2 independent images (the left image and the right image) for a particular frame is to be designated the "reference" frame. This reference frame is the frame to which the colour of the other of the 2 independent images (the "target frame") for a particular frame will be calibrated.

Once it has been decided which of the left and right frames will be the reference frame, in a stage 12 labelled "Equaliser Map Extraction", an equaliser map is extracted to enable equalisation of the target frame to the reference frame. In other words, in this stage an estimate of a mapping function is generated. The means by which the mapping function is first generated or estimated will be described in greater detail below, but it will be appreciated that any suitable method for obtaining an original estimate of the mapping function may be used. Typically, the method described in the paper by K Ulrich Faker, Marcus Barkowsky and Andre Kaup, referred to above, may be used to obtain the original estimate of the mapping function 13.

The estimate of the mapping function 13 or "first mapping function" for each of the channels is provided to a next stage 14 labelled "Artefact Analysis". Although referred to generally throughout for brevity and clarity as a "first mapping function", it will be appreciated that what is required is simply an initial or pre-processed mapping function which is then processed according to the method described herein.

At the Artefact Analysis stage, an analysis is performed on the extracted estimated mapping function 13. It is likely that due to the differences between stereo pair images, some intensity levels will not have the same frequency, i.e. pixel count, and this will result in jumps or flat regions within the extracted estimated mapping function. Such regions, whether "jumps" or "flats", may be considered "discontinuities" in the estimated mapping function. The applicant has recognised that such discontinuities within the mapping function can cause undesired effects, such as serious false contours and clipping, within the 3D generated image, if the extracted mapping function is simply applied to the target frame. Accordingly it is desirable to try and remove the artefacts. The present method provides a way by which this can be achieved.

The way by which the first mapping function for each of the channels may be modified first requires the identification and observation of discontinuities such as flat regions or sharp changes within the first mapping function. As will be explained in detail below, a weighting value is determined based on the continuity of the first mapping function and this value may then be exploited to weight the extracted or first mapping function with the identity function, i.e. x=y. Thus, the larger the discontinuous regions, the smaller the weight value ascribed to it. The colour calibration or mapping function tends to the identity function so as to handle artefacts. Other weighting and calibration functions are performed, as will be explained below, and a modified mapping function 15 is then provided to the next stage 16 at which a temporal filter is applied. Finally, a resultant or final mapping function 18 is provided and a mapping process 20 is preformed during which the target frame 22 is provided as an input and an equalised target frame 24 is generated for use in the 3D video playback. The generated signal including processed target frames 24 may be provided directly to a viewer, e.g. by transmission and/or from a peripheral device that has performed the processing or stored for later playback.

In greater detail now, as explained above, initially a decision is made as to which of the two frames or raw images being processed is the reference frame and which is the target frame for calibration to the reference frame. Preferably this is achieved by determining the dynamic ranges of the two frames, comparing the determined ranges and selecting a reference frame based on this determination. Preferably, the frame with the higher average dynamic range is chosen to be the reference frame. This has the benefit of preserving the highest dynamic range provided by the stereo video.

It could of course be that for any pair of stereo frames the R and G channels in one of the pair (say, "Image 1") have a higher dynamic range than the corresponding channels in the other of the pair (say, "Image 2"), whereas the B channel has a higher dynamic range in Image 2 than in Image 1. However, what is important is the determination and identification of an overall reference frame or image, so in one example the image with the highest mean dynamic range is chosen as the reference frame.

Dynamic ranges of the frames 4 and 6 are extracted by detecting the lowest and highest non-zero bins in each of their R, G and B histograms. It is important to note that, for video processing temporal consistency is required for better visual results. Accordingly, the reference frame decision should be temporally consistent. This consistency may be achieved by performing a reference frame decision at shot boundaries, i.e. where scene changes are observed. This may be achieved by performing a comparison between previous and current histograms of the left (or right) frames. If the absolute difference between the intensity bins of the consecutive histograms is above a threshold, then a scene change is detected and a reference frame decision is performed by dynamic range comparison between left and right frames, as explained above. However, if the absolute difference is below a threshold, no change is made and the previous reference frame decision is copied from the frame reference decision of the previous instant. This approach provides for reference frame changes only at frame shot boundaries and thus prevents flickering within a constant frame shot.

Once the reference frame is chosen, next an estimation of a colour mapping function for each of the R, G and B channels between the two (left and right) frames is performed. One way this can be achieved is by extracting R, G and B histograms of the each of the left and right frames. Cumulative histogram extraction is then performed as given in the following formulae.

$$Cum\_Hist\_Left_{RGB}(x) = \sum_{i=0}^{x} Hist\_Left_{RGB}(i)$$

$$Cum\_Hist\_Right_{RGB}(x) = \sum_{i=0}^{x} Hist\_Right_{RGB}(i) \tag{1}$$

Colour equalisation originates from the equalisation of histogram statistics between stereo frames, i.e. a pair of left and right frames 4 and 6 mentioned above. In the present method, the general method introduced in the K Ulrich Faker, Marcus Barkowsky and Andre Kaup article referred to above may be used, in modified form, so as to determine an initial mapping function 13 between stereo frames.

For each intensity level a search is performed among cumulative histograms by checking the pixel counts. The first bin in the reference cumulative histogram that has a larger pixel count than the pixel count of the corresponding intensity level in the target cumulative histogram is assigned to the corresponding pixel. The search for the next intensity level starts from the mapping value of the previous intensity level. Thus, a series of points builds up from the lowest possible intensity level to the maximum. Eventually the points can be joined in a line using standard interpolation techniques so as to define an initially estimated or first mapping function.

The mapping function comprises a plot of intensity levels on the x- and y- axes. In other words, it can be used as a look up table in that for any value of intensity in the target frame, it provides an intensity value to which that target frame pixel will be mapped. Thus, it enables the target frame to be changed to so as to calibrate colour between the reference frame and the target. In this way, the cumulative histogram of the target frame for each of the R, G and B channels is equalised to the corresponding reference cumulative histogram.

However, the present applicant has now recognised that it is not uncommon for there to be discontinuities in the initially estimated or extracted or first mapping function 13. It is desired that the final mapping function 18 for each of the channels between cumulative histograms should be continuous so as to have artifact free equalisation. Due to occlusions between stereo pairs some intensity levels do not have same frequency, i.e. pixel count, resulting in jumps or flat regions in an initially extracted or estimated mapping function.

Figures 2 and 3 show schematic representation of initially estimated mapping functions which include discontinuities. In Figure 2, a vertical discontinuity is included in the mapping function. If this were used in its "raw" form, pixels with intensity values just below the discontinuity $D_1$, would be mapped to an intensity of $M_1$, whereas pixels with intensity values just above the discontinuity $D_1$, would be mapped to an intensity of $M_2$. In other words pixels which should be very close in intensity levels would now be separated by an amount $M_2 - M_1$.

In Figure 3 similar issues arise where there are flat regions within the mapping function. Here pixels that should be mapped to varying intensity levels will all be mapped to the value $M_3$ of the flat region. Thus, all intensity values between $D_2$ and $D_3$ will be mapped to an intensity value of $M_3$.

Such discontinuous and flat regions within the estimated mapping function can cause serious false contours and clipping over intermediate intensity levels. These artefacts are not desired and the applicant has recognised that they arise from the assumption that equalising cumulative histograms provides equalisation of images. A method is hereby provided by which these artefacts are handled so as to perform reduced- or artefact-free colour calibration in 3D TV.

This is achieved by measuring the discontinuity and the flatness of the mapping function and determining or calculating a weighting factor. The weighting factor decreases as the continuity of the mapping decreases. Such an approach provides the effect of colour equalisation to be achieved whilst removing or minimising visual artefacts.

The discontinuity of the mapping function is measured as follows; for each intensity level the absolute difference of the mapping values of the previous and following neighbouring intensity levels (with *d* distance) are compared with a threshold. If the difference is above the threshold, then a possible jump is observed for that intensity level and the difference is accumulated. After this process has been performed for all intensity levels for each of the R, G and B channel mapping functions independently, an average jumping factor for each of the mapping functions is calculated by normalizing the accumulated absolute difference by the number of over threshold cases. This approach has the benefit of ignoring smooth increases in the mapping function, while detecting sharp discontinuities. Thus, the process, in this example, is performed for each of the R, G and B channels independently.

Flat regions (as seen in Fig. 3) are detected in a similar way to discontinuity detection. The absolute difference of the mapping values of the neighbouring intensity levels are compared to a threshold, for each intensity level. The number of occurrences where the difference is below a threshold is determined, indicating the flatness of the mapping function. A higher or increasing number of occurrences, indicates that the flatness of the mapping function is also high or increased. The thresholds can be at any appropriate values to enable discontinuities to be detected within the first mapping function.

Hence two measures are determined for each of the extracted R, G and B mapping functions, the average jump (*ave_jump*) over a predetermined threshold and the number of intensity levels (*flat_num*) among the flat regions where variation is below a threshold. These two metrics are utilized to calculate a weighting factor, defining the effectiveness of the mapping function. Thus, two factors are determined for each of the R, G and B channels as given in the following equation.

$$jump\_factor_{RGB} = \max(0, 1 - \frac{ave\_jump}{jump\_THRES})$$

$$flat\_factor_{RGB} = \max(0, 1 - \frac{flat\_num}{flat\_THRES}) \tag{2}$$

In Eq. 2, the *jump_THRES* and *flat_THRES* are user defined parameters indicating the tolerance of the algorithm to artefacts. Thus, a user can define these parameters at levels that correspond to the tolerance to artefacts. As explained above, given that *jump_THRES* and *flat_THRES* are user-defined parameters, set for example by a television company or an end user, it is possible that in some cases values might be chosen that leave the consequent values of $jump\_factor_{RGB}$ and $flat\_factor_{RGB}$ for each of the channels outside the range of 0 to 1. Hence a maximisation function is defined which limits the values to this desired range. The final weighting factor that is to be applied for each channel is obtained by getting the smaller one of the jump_ and flat_ factors $jump\_factor_{RGB}$ and $flat\_factor_{RGB}$.

$$weight\_factor = \min(jump\_factor_{RGB}, flat\_factor_{RGB}) \qquad (3)$$

The *weight_factor* is decreased for the cases where sharp jumps or long flat regions are observed among the first mapping function, and is equal to "1" for the smooth mapping functions. Thus, the weight factor, is selected as the one from *jump_factor* and *flat_factor* which is the smaller of the two. This ensures that in the smoothing of the first mapping function for a given channel, bias is given to cases in which artefacts can or are most likely to be observed. For example, if $jump\_factor_{RGB}$ = 0 and $flat\_factor_{RGB}$ =1, the value "0" is considered to be the *weight_factor.*

As mentioned above, in the present non-limiting example, the RGB colour model is used and the formulation of the equations is presented accordingly, i.e. with "RGB" used as a subscript. It will be appreciated that where other colour models or spaces are used, the equations can simply be modified accordingly, i.e. by change of the corresponding subscripts.

Next, after having determined an overall weighting factor for a particular channel, the factor is applied to the initial mapping function for that channel. At this point, it is preferred that a scaling function is determined to decrease calibration effects at the borders of the dynamic range as illustrated in Figure 4. This prevents possible over or under clipping artefacts at the highest and lowest intensity levels. A parameter, "β", shown in Figure 4, indicates the proportion of the effect at the dynamic range borders. As the intensity levels get closer to the median level the scale increases to "1", meaning that the full weight is applied to the mid levels. However, at the extremes, the proportion of the weighting effect applied is reduced so as to reduce the risk of effects such as clipping and the like.

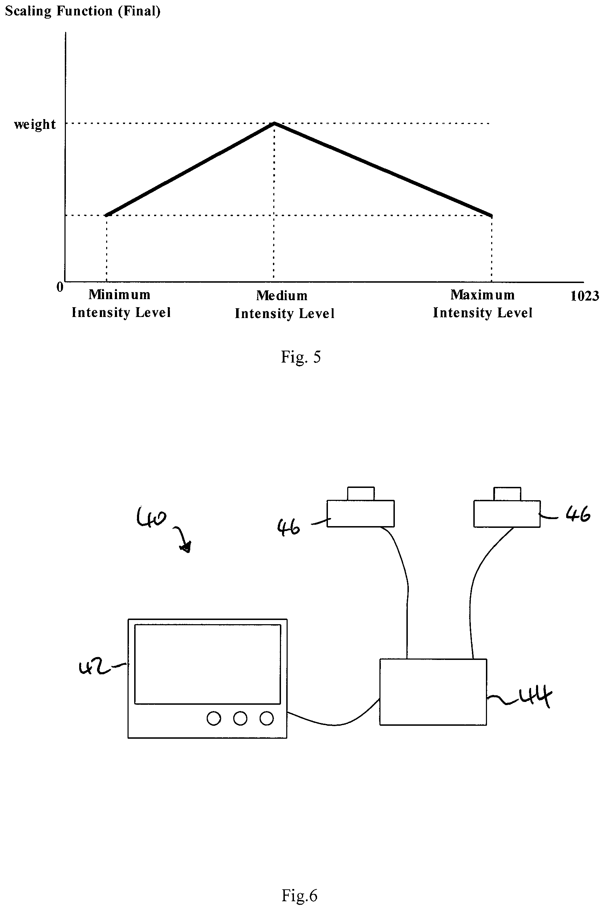

In general, β can be set as 0.75 to prevent clipping artefacts. Thus a factor of 0.75 is used to reduce the effect of the weighting at the intensity limits. By defining a factor β to be applied at the intensity limits, it can be appreciated that overall a scaling function is defined. Typically the value of β is set within a range which may be between 0.5 and 1.0. Figure 4 is a schematic representation of what such a scaling function would look like. The scaling function is then weighted by the *weight_factor* and for each intensity level weighting factors are determined, as can be understood with reference to Figure 5.

Next, the determined weighting function is applied to the histogram mapping function. The weighting is performed with an identity mapping function where each intensity level within the target frame is mapped to itself. The operation is performed as follows:

$$map\_ref_{RGB}(i) = map\_init_{RGB}(i) * weight(i) + (1 - weight(i)) * i \quad (4)$$

In Eq. 4, refined mapping function (*map_ref*) is determined by weighting the initial mapping function (*map_init*) with the identity mapping function. As explained above, the weighting operation given in equation 4 thus provides for possible artefacts due to sharp discontinuities and undesired flat regions in the originally estimated mapping function. In addition, use of the scaling function for intensity levels at the dynamic range borders prevents clipping that could ruin or decrease the visual quality.

The final stage of the colour calibration algorithm involves reduction of possible flicker in temporal domain. To achieve this, an infinite impulse response (iir) filter with fixed damping value (α) between 0 and 1, i.e. $0 \le \alpha \le 1$, is utilized to weight the mapping functions (*curr_map* and *pre_map*) of the current and previous frames for each of the R, G and B channels as given in the following equation.

$$curr\_map_{RGB}(i) = \alpha * curr\_map_{RGB}(i) + (1 - \alpha) * pre\_map_{RGB}(i)$$
$$(5)$$

This provides a final mapping function for each of the R, G and B channels, each of which functions is applied to the target frame in order to equalize colour distribution of the stereo frames.

Figure 6 is a simplified schematic representation of a TV playback or processing system 40 for play back of 3D TV. The system comprises a display device 42, which is typically a television set and a processor (not shown) which may be housed either in the television set or in a set top box or other such peripheral device 44. The processor is arranged to process image signals comprising frames captured by two image capture devices 46. In the example shown and for purposes of explanation only the image capture devices are shown as connected to the peripheral device 44. In normal situations the image capture devices are independent devices used when a 3D film or program is recorded and the captured images are stored on some playback medium, e.g. DVD, memory device etc. When the stored images are provided to the peripheral device or television set including the processor, the processor acts on the images in accordance with the method described above.

In one embodiment, the processor is provided on a playback device. In another embodiment, the processor is part of a video processing device that is arranged to receive the stereo signals and process them to generate a processed 3D or stereo video signal which can then be stored on some memory device and/or transmitted to end users. It will be appreciated that what is important is the provision of some means for processing the raw captured stereo video signals in accordance with the method as described herein. Typically, memory will be provided as part of the apparatus for storing the received input stereo signals, i.e. the raw signals, and/or for storing the processed or calibrated signals too.

Embodiments of the present invention have been described with particular reference to the examples illustrated.

**Claims**

1. A method of calibration of first and second stereo images, the method comprising
generating a first mapping function (13) to map the colour dynamic range of the first image (4) to that of the second image (6);
**characterised by** moderating the first mapping function to generate a smoothed mapping function (15); and applying the mapping function (15) to moderate the colour of the first image.

2. A method according to claim 1, in which the step of generating a first mapping function (13) to map the colour dynamic range of the first image to that of the second image, comprises:

   generating cumulative histograms for each of the first and second images; and,
   determining a mapping function to map the cumulative histogram of the first image to the cumulative histogram of the second.

3. A method according to claim 2, in which the method comprises detecting discontinuities in the first mapping function (13) and wherein moderating the first mapping function (13) comprises smoothing the first mapping function to remove the detected discontinuities.

4. A method according to claim 3, in which the smoothing comprises applying to the first mapping function a weighted modification so as to smooth out the discontinuities in the first mapping function.

5. A method according to claim 4, in which the weighted modification comprises use of a weight factor, which factor is decreased for the cases where sharp jumps or long flat regions are included the first mapping function.

6. A method according to claim 4 or 5, comprising determining one or more of a jump factor (jump_factor$_{RGB}$) and a flatness factor (flat_factor$_{RGB}$) in accordance with the following equation:

$$jump\_factor_{RGB} = \max(0, 1 - \frac{ave\_jump}{jump\_THRES})$$

$$flat\_factor_{RGB} = \max(0, 1 - \frac{flat\_num}{flat\_THRES})$$

in which *jump_factor*$_{RGB}$ and *flat_factor*$_{RGB}$ are weighting factors used to determine the effectiveness of the first mapping function;
*jump_THRES* and *flat_THRES* are user defined parameters indicating user tolerance to artefacts;

*ave_jump* and *flat_num* are parameters indicative of the number and/or size of discontinuities within the first mapping function.

7. A method according to claim 6, in which the weight factor used to determine the smoothing of the first mapping function is defined in dependence on a weight factor defined in accordance with the equation:

$$weight\_factor = \min(jump\_factor_{RGB}, flat\_factor_{RGB})$$

8. A method according to any of claims 2 to 7, in which a scaling factor $\beta$ is determined to reduce the effect of the weighting at intensity limits.

9. A method according to claim 8, in which the factor $\beta$ satisfies the following condition:

$$0.5 < \beta < 1.0.$$

10. A method according to any of claims 1 to 9, comprising applying a temporal filter so as to remove flicker from processed images.

11. A method according to claim 10, in which the temporal filter comprises applying the following formula to determine, for intensities *i,* a final *curr_map$_{RGB}$(i)* temporally filtered mapping function,

$$curr\_map_{RGB}(i) = \alpha * curr\_map_{RGB}(i) + (1-\alpha) * pre\_map_{RGB}(i)$$

in which an infinite impulse response (iir) filter is applied with a fixed damping value ($\alpha$) in the range of [0, 1] so as to weight the mapping functions of the current and previous (*pre_map*) frames.

12. A method according to any of claims 1 to 11, in which the method is performed independently for each of plural colour channels, such as R, G and B.

13. Apparatus for calibration of first and second stereo images, the apparatus comprising a processor being arranged to, using the processor:

generate a first mapping function (13) to map the colour dynamic range of the first image (4) to that of the second image (6);
**characterised by** using the processor to moderate the first mapping function (13) to generate a smoothed mapping function; and
apply the mapping function to moderate the colour of the first image (4).

14. Apparatus according to claim 13, comprising means for performing the method of any one or more of claims 2 to 12.

**Patentansprüche**

1. Verfahren zur Kalibrierung erster und zweiter Stereobilder, wobei das Verfahren folgendes umfasst:

Erzeugen einer ersten Abbildungsfunktion (13) zur Abbildung des Farbdynamikbereichs des ersten Bilds (4) auf den des zweiten Bilds (6);
**gekennzeichnet durch** Moderation der ersten Abbildungsfunktion, um eine geglättete Abbildungsfunktion (15) zu erzeugen; und
Anwenden der Abbildungsfunktion (15) zum Moderieren der Farbe des ersten Bilds.

2. Verfahren nach Anspruch 1, wobei der Schritt des Erzeugens einer ersten Abbildungsfunktion (13) zur Abbildung des Farbdynamikbereichs des ersten Bilds (4) auf den des zweiten Bilds (6) folgendes umfasst:

Erzeugen kumulativer Histogramme für jedes der ersten und zweiten Bilder; und

Bestimmen einer Abbildungsfunktion zur Abbildung des kumulativen Histogramms des ersten Bilds auf das kumulative Histogramm des zweiten Bilds.

3. Verfahren nach Anspruch 2, wobei das Verfahren das Erkennen von Unstetigkeiten in der ersten Abbildungsfunktion (13) umfasst, und wobei die Moderation der ersten Abbildungsfunktion (13) das Glätten der ersten Abbildungsfunktion umfasst, um die erkannten Unstetigkeiten zu beseitigen.

4. Verfahren nach Anspruch 3, wobei das Glätten das Anwenden einer gewichteten Modifikation auf die erste Abbildungsfunktion umfasst, um die Unstetigkeiten in der ersten Abbildungsfunktion heraus zu glätten.

5. Verfahren nach Anspruch 4, wobei die gewichtete Modifikation die Verwendung eines Gewichtungsfaktors umfasst, wobei der Faktor für die Fälle herabgesetzt wird, wenn die erste Abbildungsfunktion starke Anstiege oder lange flache Regionen aufweist.

6. Verfahren nach Anspruch 4 oder 5, umfassend das Bestimmen eines oder mehrerer eines Anstiegsfaktors ($jump\_factor_{RGB}$) und eines Flachheitsfaktors ($flat\_factor_{RGB}$) gemäß der folgenden Gleichung:

$$jump\_factor_{RGB} = \max(0, 1 - \frac{ave\_jump}{jump\_THRES})$$

$$flat\_factor_{RGB} = \max(0, 1 - \frac{flat\_num}{flat\_THRES}) \quad ,$$

wobei: $jump\_factor_{RGB}$ und $flat\_factor_{RGB}$ Gewichtsfaktoren sind, die zum Bestimmen der Wirksamkeit der ersten Abbildungsfunktion verwendet werden;

$jump\_THRES$ und $flat\_THRES$ benutzerdefinierte Parameter sind, welche die Benutzertoleranz in Bezug auf Artefakte anzeigen;

$ave\_jump$ und $flat\_num$ Parameter sind, welche die Anzahl und/oder die Größe der Unstetigkeiten in der ersten Abbildungsfunktion anzeigen.

7. Verfahren nach Anspruch 6, wobei der zum Bestimmen der Glättung der ersten Abbildungsfunktion verwendete Gewichtungsfaktor abhängig von einem gemäß der folgenden Gleichung definierten Gewichtungsfaktor definiert ist:

$$weight\_factor = \min(jump\_factor_{RGB}, flat\_factor_{RGB}) \quad .$$

8. Verfahren nach einem der Ansprüche 2 bis 7, wobei ein Skalierungsfaktor $\beta$ bestimmt wird, um den Effekt der Gewichtung bei Intensitätsgrenzwerten zu verringern.

9. Verfahren nach Anspruch 8, wobei der Skalierungsfaktor $\beta$ die folgende Bedingung erfüllt:

$$0,5 < \beta < 1,0.$$

10. Verfahren nach einem der Ansprüche 2 bis 9, umfassend das Anwenden eines Zeitfilters zur Beseitigung von Flickern aus verarbeiteten Bildern.

11. Verfahren nach Anspruch 10, wobei der Zeitfilter das Anwenden der folgenden Formel umfasst, um für Intensitäten $i$ eine finale zeitgefilterte Abbildungsfunktion $curr\_map_{RGB}(i)$ zu bestimmen:

$$curr\_map_{RGB}(i) = \alpha * curr\_map_{RGB}(i) + (1-\alpha) * pre\_map_{RGB}(i)$$

,

wobei ein Filter mit unbegrenztem Impulsansprechverhalten (iir) mit einem festen Dämpfungswert ($\alpha$) im Bereich von [0,1] angewendet wird, um die Abbildungsfunktionen der aktuellen und vorhergehenden (*pre_map*) Frames zu gewichten.

**12.** Verfahren nach einem der Ansprüche 1 bis 11, wobei das Verfahren unabhängig für jeden von mehreren Farbkanälen, wie etwa R, G und B, ausgeführt wird.

**13.** Vorrichtung zur Kalibrierung erster und zweiter Stereobilder, wobei die Vorrichtung einen Prozessor umfasst und so angeordnet ist, um unter Verwendung des Prozessors folgendes auszuführen:

Erzeugen einer ersten Abbildungsfunktion (13) zur Abbildung des Farbdynamikbereichs des ersten Bilds (4) auf den des zweiten Bilds (6);
**gekennzeichnet durch** Verwenden des Prozessors zur Moderation der ersten Abbildungsfunktion (13), um eine geglättete Abbildungsfunktion zu erzeugen; und
Anwenden der Abbildungsfunktion zum Moderieren der Farbe des ersten Bilds (4).

**14.** Vorrichtung nach Anspruch 13, umfassend Mittel zur Ausführung des Verfahrens nach einem der Ansprüche 2 bis 12.

**Revendications**

**1.** Procédé d'étalonnage d'une première et d'une seconde image stéréo, le procédé comprenant les étapes consistant à générer une première fonction de mappage (13) pour mapper la gamme dynamique de couleur de la première image (4) sur celle de la seconde image (6) ;
**caractérisé par** la modération de la première fonction de mappage pour générer une fonction de mappage lissée (15) ; et
appliquer la fonction de mappage (15) pour modérer la couleur de la première image.

**2.** Procédé selon la revendication 1, la génération d'une première fonction de mappage (13) pour mapper la gamme dynamique de couleur de la première image sur celle de la seconde image, comprenant les étapes consistant à :

générer des histogrammes cumulatifs pour chacune des première et seconde images ; et,
déterminer une fonction de mappage pour mapper l'histogramme cumulatif de la première image sur l'histogramme cumulatif de la seconde image.

**3.** Procédé selon la revendication 2, le procédé comprenant l'étape consistant à détecter des discontinuités dans la première fonction de mappage (13) et la modération de la première fonction de mappage (13) comprenant l'étape consistant à lisser la première fonction de mappage pour supprimer les discontinuités détectées.

**4.** Procédé selon la revendication 3, le lissage comprenant l'étape consistant à appliquer à la première fonction de mappage une modification pondérée de sorte à lisser les discontinuités dans la première fonction de mappage.

**5.** Procédé selon la revendication 4, la modification pondérée comprenant l'utilisation d'un facteur de pondération, ledit facteur étant diminué pour les cas où des sauts brutaux ou de longues régions plates sont inclus dans la première fonction de mappage.

**6.** Procédé selon la revendication 4 ou 5, comprenant l'étape consistant à déterminer un facteur de saut (jump_factor$_{RGB}$) et/ou un facteur de planéité (flat_factor$_{RGB}$) conformément à l'équation suivante :

$$jump\_factor_{RGB} = \max(0, 1 - \frac{ave\_jump}{jump\_THRES})$$

$$flat\_factor_{RGB} = \max(0, 1 - \frac{flat\_num}{flat\_THRES})$$

$jump\_factor_{RGB}$ et $flat\_factor_{RGB}$ étant des facteurs de pondération utilisés pour déterminer l'efficacité de la première fonction de mappage ;

$jump\_THRES$ et $flat\_THRES$ étant des paramètres définis par l'utilisateur indiquant la tolérance de l'utilisateur aux artefacts ;

$ave\_jump$ et $flat\_num$ étant des paramètres indiquant le nombre et/ou la taille des discontinuités dans la première fonction de mappage.

7. Procédé selon la revendication 6, le facteur de pondération utilisé pour déterminer le lissage de la première fonction de mappage étant défini en fonction d'un facteur de poids défini conformément à l'équation :

$$weight\_factor = \min(jump\_factor_{RGB}, flat\_factor_{RGB})$$

8. Procédé selon l'une quelconque des revendications 2 à 7, un facteur d'échelle $\beta$ étant déterminé pour réduire l'effet de la pondération aux limites d'intensité.

9. Procédé selon la revendication 8, le facteur $\beta$ satisfaisant la condition suivante :

$$0,5 < \beta < 1,0.$$

10. Procédé selon l'une quelconque des revendications 1 à 9, comprenant l'étape consistant à appliquer un filtre temporel de sorte à supprimer le papillotement des images traitées.

11. Procédé selon la revendication 10, le filtre temporel comprenant l'étape consistant à appliquer la formule suivante pour déterminer, pour les intensités $i$, une fonction de mappage temporellement filtrée $curr\_map_{RGB}(i)$ finale,

$$curr\_map_{RGB}(i) = \alpha * curr\_map_{RGB}(i) + (1-\alpha) * pre\_map_{RGB}(i)$$

un filtre à réponse impulsionnelle infinie (iir) étant appliqué avec une valeur d'amortissement fixe ($\alpha$) dans la plage de [0, 1] de sorte à pondérer les fonctions de mappage des trames actuelles et précédentes ($pre\_map$).

12. Procédé selon l'une quelconque des revendications 1 à 11, le procédé étant effectué de façon indépendante pour chacun des canaux de couleur, tels que R, G et B.

13. Appareil d'étalonnage d'une première et d'une seconde image stéréo, l'appareil comprenant un processeur et étant conçu pour, à l'aide du processeur :

générer une première fonction de mappage (13) pour mapper la gamme dynamique de couleur de la première image (4) sur celle de la seconde image (6) ;
**caractérisé par** l'utilisation du processeur pour modérer la première fonction de mappage (13) pour générer une fonction de mappage lissée ; et
appliquer la fonction de mappage pour modérer la couleur de la première image (4).

14. Appareil selon la revendication 13, comprenant un moyen pour effectuer le procédé selon l'une quelconque des revendications 2 à 12.

Fig. 1

Mapping Function

Fig. 2

**Mapping Function**

Fig. 3

**Scaling Function**

Fig. 4

**Scaling Function (Final)**

weight

| | | |
|---|---|---|
| Minimum | Medium | Maximum |
| Intensity Level | Intensity Level | Intensity Level |

0

1023

Fig. 5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100066811 A
- US 20070120972 A
- WO 2007007924 A
- US 7505623 A
- US 6111596 A
- US 20080252638 A
- WO 2009150529 A

**Non-patent literature cited in the description**

- **K ULRICH FAKER ; MARCUS BARKOWSKY ; ANDRE KAUP.** Histogram Based Pre-filtering for Luminance and Chrominance Compensation of Multi-view Video. *IEEE Transactions on Circuits and Systems for Video Technology,* September 2008, vol. 18 (9